# EUROPEAN PATENT SPECIFICATION

(11) **EP 0 373 911 B1**
(45) Date of publication and mention of the grant of the patent: **24.05.1995**
(21) Application number: 89313022.9
(22) Date of filing: 13.12.1989
(51) Int. Cl.: C08L 33/06, C08L 33/24

(54) **Polymer blends with enhanced properties**
Polymermischungen mit verbesserten Eigenschaften
Mélanges de polymères à propriétés modifiées

(30) Priority: 16.12.1988 US 285671; 16.11.1989 US 438371
(43) Date of publication of application: 20.06.1990
(73) Proprietor: ROHM AND HAAS COMPANY, Philadelphia Pennsylvania 19105 (US)
(72) Inventor: Freed, William Thayer, Stockton New Jersey 08559 (US); Work, William James, Huntingdon Valley Pennsylvania 19006 (US); Amici, Robert Mark, Doylestown Pennsylvania 18901 (US); La Fleur, Edward Ewart, Warminster Pennsylvania 18974 (US); Carson, William Gilmour, Morrestown New Jersey 08057 (US)
(74) Representative: Angell, David Whilton

(56) References cited:
- DE-A- 2 523 051
- US-A- 2 509 857
- US-A- 2 557 266
- US-A- 4 650 824

## Description

This invention is concerned with blends of glutarimide and, optionally (meth)acrylate polymer forming a continuous phase, with polymer containing vinyl alcohol mers which is either miscible with, or forms a discontinuous phase in, the glutarimide/(meth)acrylate polymer, and any other polymer which may be present in the continuous phase. These blends are especially useful in the form of film, sheet, bottles, or other packaging articles.

The packaging industry has long sought to develop plastic film, sheet, bottles, wrappings, and containers which are impervious to oxygen for preserving oxidizable materials and oxygen-sensitive foods and beverages. That industry has further sought to develop similar materials resistant to the passage of carbon dioxide for use in maintaining the carbonation of carbonated beverages. Resistance to passage of water vapor is also important to the packaging industry. No organic polymeric materials are truly impervious to gases; they all show some degree of permeability. Those which have low permeability to a particular gas are considered to be good barriers for that gas, while those which have high permeability are considered to be non-barrier materials with respect to that particular gas. The most useful polymers which exhibit very low values for oxygen permeability, i.e., are good barriers to oxygen, are poly(vinylidene chloride) and polymers containing vinyl alcohol mers, such as ethylene-vinyl alcohol copolymers containing less than about 50 mol percent ethylene units, or the homopolymers of hydrolyzed poly(vinyl acetate) known as poly(vinyl alcohol)s.

Although each of these types of polymers is utilized in commerce, they have deficiencies which limit their broader use. Poly(vinylidene chloride) is thermally less stable than most polymers and is difficult to process; poly(vinyl alcohol)s are difficult to process, and their barrier properties are greatly affected by high relative humidity, and the ethylene-vinyl alcohol polymers, which are more easily processed than poly(vinyl alcohol)s not containing ethylene, are also sensitive to moisture, and are not optically clear. Further, the structural properties required for many applications are difficult to achieve with these polymers.

The packaging industry has also sought to prepare containers exhibiting enhanced service temperature for the hot-fill packaging of foods, sterilization prior to packaging, autoclaving to sterilize contents, and the like. Materials attractive for such heat-sensitive uses tend to have poor barrier properties.

Polymers based on lower alkyl methacrylates, such as poly(methyl methacrylate) exhibit clarity, have some degree of toughness, and can be compounded with impact modifiers to improve toughness, but do not exhibit satisfactory barrier properties. Conversion by reaction with lower alkyl amines or ammonia to polymers with mers of glutarimide improves the barrier properties significantly, but they still do not meet the requirements of the most demanding barrier applications. Kopchik, U. S. Patent No. 4,246, 374, discloses such polymers in thermally stable form, and discloses that their barrier properties are superior to most clear thermoplastics.

Hallden-Abberton et al., in U.S. Patent No. 4,727,117, describe a means of reducing the content of unreacted acid and anhydride groups of glutarimide polymers to prepare novel polymers of even higher thermal stability. In that patent, an extensive list of polymers with which such acid-content reduced glutarimides may be blended is given. Among these polymers are listed ethylene-vinyl acetate polymers and polyvinyl alcohol. Ethylene-vinyl alcohol polymers have not been disclosed for this use, and there is no suggestion in the prior art that the permeability behavior of such blends would differ in any way from an expected average performance, nor that the resulting blend would be particularly useful in barrier packaging applications. There is further no suggestion that blends of a second polymer with the acid-reduced polyglutarimides could be admixed with the polymers containing vinyl alcohol mers to obtain the barrier properties of the present invention.

Blends of ethylene-vinyl alcohol polymers with vinyl alcohol contents greater than about 50 mol percent have been noted in the patent literature as components of blends with certain matrix polymers, such blends having attractive barrier properties. Particularly noted as matrices are poly(vinyl chloride) in U.S. Patent No. 4,003,963, poly(ethylene terephthalate) in US Patent No. 4,284,671, and polypropylene in U.S. Patent No. 4,362,844. These patents do not suggest the use of ethylene-vinyl alcohol copolymers with acrylic or glutarimide polymers for such purposes, nor do they disclose unexpected improvement in barrier properties at low levels of the ethylene-vinyl alcohol copolymer in the blend.

Particularly noted is the intensive study of polyamide blends with ethylene-vinyl alcohol resins. U.S. Patent No. 4,427,825 teaches such blends, wherein there are regions of the ethylene-vinyl alcohol copolymer having an average diameter of less than 50 nanometers in the polyamide. These compositions, as do those of the blends noted in the previous paragraph, exhibit a linear relationship for permeability behavior which is expected for such blends and which is demonstrated by a straight-line plot when the permeability is plotted as the ordinate on semi-logarithmic paper with ethylene-vinyl alcohol content as the abscissa.

One known exception to this additive relationship of the linear logarithm of permeability is the disclosure in U.S. Patent No. 4,410,482 of blends of a polyolefin matrix and a modified or dispersed nylon polymer, in which the nylon is processed to form laminar domains in the matrix. Such blends exhibit barrier properties against hydrocarbon liquids and gases substantially improved over that predicted for a homogeneous blend. Processes are also taught for the incorporation into the polyolefin matrix of dispersed similar platelets of other polymers, such as polycarbonate and poly(butylene terephthalate). This patent does not teach or suggest the utility of ethylene-vinyl alcohol to form laminar structures in poly(glutarimides); indeed, it requires a solvent or a dispersant polymer to obtain the laminar structures, whereas the present invention achieves the desired structure by a conventional thermal/ mechanical history of mixing. This patent also does not teach or suggest that the combination of ethylene-vinyl alcohol or poly(vinyl alcohol) polymers within a polyglutarimide matrix will produce unexpectedly good resistance to the passage of gases. Further, the platelet or laminar morphology shown by this patent does not necessarily correspond with the morphology of the present blends; in some examples of improved barrier properties exemplified herein, the vinyl alcohol (co)polymer is finely dispersed in very small particles uniformly throughout the glutarimide matrix, and in others, the vinyl alcohol (co)polymer blend with the glutarimide or poly(lower alkyl) methacrylate matrix polymer shows optical clarity, a single glass-transition temperature, and/or other indicators of blend compatibility. Certain blends at relatively high levels of certain ethylene-vinyl alcohol copolymers do produce a laminar structure with excellent barrier performance.

European Patent Application No. 273,897 discloses blends of polyethylene terephthalate with styrene-maleic anhydride as blow-molded containers having an oriented crystalline continuous phase of polyethylene terephthalate containing dispersed ovoid particles of the styrene copolymer, the ovoids having a diameter of 0.1 to 0.8 »m and a length of 0.3 to 2 »m. The microstructure is reported to impart physical properties suitable for containment or protection against permeation of gases or organic fuels.

A publication in Research Disclosure, October, 1988, page 726, discusses the barrier properties of blends of poly(ethylene naphthalene carboxylate) with relatively low levels of ethylene-vinyl alcohol copolymers. This publication states that the actual values for oxygen permeability in such blends are four to five times lower than predicted from calculations of the effective permeability of the ethylene-vinyl alcohol copolymer from PET data. These data, while not calculated against a pure ethylene-vinyl alcohol polymer standard and thus not directly comparable with the data of the present invention, do show an unexpected improvement in a manner also demonstrated herein. The composite materials of the reference are opaque; the domains which are necessary to lower the oxygen permeability must be large enough to eliminate the clarity of the blends and thus destroy one of the particularly useful properties of the matrix polymers.

We have now found that a polymer blend having outstanding barrier properties to oxygen, carbon dioxide and moisture can be prepared from one or more polymers having certain desirable physical properties but inadequate gas barrier properties of their own, by using therein polymer containing vinyl alcohol mers, which has excellent barrier properties, which blends display a surprisingly good combination of physical (including optical) and barrier properties. These enable the preparation of barrier blend structures having an unexpectedly good balance of optical properties, resistance to impact, service temperature (sufficient for hot-fill and sterilization) and/or other desirable physical properties.

The polymer blends comprise from 20 to 95% by weight of first polymer containing, in a total amount of at least 50 mole percent, mers of glutarimides and, optionally lower alkyl (meth)acrylates and forming a continuous phase and from 2.5% to 40% by weight of second polymer having at least 50 mole percent vinyl alcohol mers which is either mixed with, or forms a discontinuous phase in, the continuous phase, the blend also optionally containing up to 25% by weight of one or more other thermoplastic polymers compatible with the continuous phase. The invention also extends to film, sheet, molded article, container or packaging material embodying said use.

The term "mer" as used herein means a combination of elements which, when polymerized by addition polymerization, forms a single repeating unit in a polymer. Thus the monomer ethylene (CH₂=CH₂) becomes the mer ethylene (CH₂-CH₂) in polyethylene, even though the ethylenic double bond is no longer present in the polymer. The mer may be hypothetical, as in a vinyl alcohol mer present in hydrolyzed poly(vinyl acetate). More than one mer is present in a copolymer. Mers may be formed by post-reaction on a polymer, such as in a N-methyl dimethylglutarimide mer formed by the addition of methylamine to two neighboring mers of methyl methacrylate accompanied by the loss of two molecules of methanol.

The term (meth)acrylate, as used herein refers to an acrylate ester, a methacrylate ester, a mixture of the two, or mers of an acrylate ester, a methacrylate ester or a mixture of the two. Similarly, (meth)acrylamide refers to acrylamide, methacrylamide, a mixture of the two, or mers of acrylamide, methacrylamide or a mixture of the two.

In the present specification, the term "glutarimide" or "glutarimide polymer" refers to polymers containing the cyclic group or mer of formula I 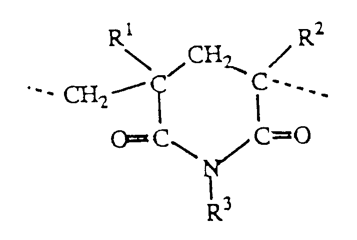
where R¹ and R² may be H or (C₁-C₆) alkyl, preferably both R¹ and R² being methyl, and R³ is alkyl, aryl, alkaryl, or aralkyl.

The term "lower alkyl", as used in the specification and Claims, means alkyl groups having from one to six carbon atoms, such as methyl, ethyl, n-propyl, sec-propyl, n-butyl, isobutyl, pentyl, hexyl and cyclohexyl.

Substituents may be present on the R³ groups, such as hydroxy, halogen, such as chlorine or fluorine, and the like. Preferably, R³ is alkyl of from one to four carbon atoms, and more preferably methyl. The glutarimide group may be the sole repeating unit or mer in the polymer, or the polymer may contain other mers, preferably those of an alkyl (meth)acrylate, and more preferably methyl methacrylate. Other mers, such as those from any other monoethylenically unsatured monomer such as vinyl aromatics, vinyl esters, (meth)acrylonitrile, vinyl heterocycles or maleic derivatives, especially such as styrene, α-methylstyrene, p-hydroxystyrene, vinyl chloride, (meth)acrylic acid, (meth)acrylic anhydride, maleic anhydride, maleimide, cyclohexyl methacrylate, N-vinyl pyrrolidone, 4-vinyl pyridine, (meth)acrylamides, such as (meth)acrylamide, N-methyl (meth)acrylamide and N,N-dimethyl (meth)acrylamide, other (meth)acrylic esters, (meth)acrylonitrile, N-substituted maleimides where the substituted group is R³, especially N-alkyl maleimides or N-aryl maleimides, may also be present. While the glutarimide polymer may contain smaller proportions of glutarimide mers and still be within the invention as contemplated, a preferred glutarimide polymer contains at least about 50%, preferably at least about 60%, mers of glutarimide, and a more preferred glutarimide polymer contains at least about 80% mers of glutarimide.

The glutarimide polymer may be prepared by any of the methods known to those skilled in the art, such as by the reaction at elevated temperature of (meth)acrylic ester polymers or (meth)acrylic acid-(meth)acrylic ester copolymers with ammonia, an amine, urea, or a substituted urea, by reaction of poly((meth)acrylic anhydride) with ammonia or an amine, by thermal reaction of a (meth)acrylic ester-(meth)acrylamide copolymer to form the imide ring, or by reaction in solution or in the melt of a polymer containing a high proportion of (meth)acrylic ester groups with ammonia or an amine. Preferred glutarimides are prepared by the method taught in U.S. Patent No. 4,246,374, in which a (meth)acrylic-ester-containing polymer is reacted with an amine at elevated temperatures in a devolatilizing extruder. The glutarimide polymer may be of weight-average molecular weight from about 10,000 to about 10,000,000. A preferred molecular-weight range for retention of properties and ease of processing is from about 50,000 to about 200,000.

Polymers containing mers of formula I which have limited thermal stability resulting from the presence of relatively large amounts of acid, anhydride or other de-stabilizing components may be used in the present invention, but they will be less desirable because of deficiencies in processing and use.

The poly(glutarimide) may be further post-treated to reduce or remove acid and/or anhydride groups by treating it with reagents that eliminate such groups, such as, for example, dimethyl carbonate; these reduced-acid polymers are preferred, but polyglutarimides containing acids and/or anhydrides are also useful in the present invention.

Also useful in the present invention as the first polymer are polymers also containing mers of a lower (i.e. C₁-C₆)-alkyl (meth)acrylate, preferably methyl methacrylate, but including mers such as methyl acrylate, ethyl acrylate or methacrylate, butyl acrylate or methacrylate, hexyl methacrylate or methacrylate, and cyclohexyl acrylate or methacrylate. The first polymer may also include mers of other monoethlyenically unsaturated monomers such as those disclosed above as suitable for inclusion in the glutarimide polymer, and especially such as substituted alkyl acrylates and methacrylates, such as α-hydroxyethyl methacrylate and α-hydroxypropyl acrylate, vinyl heterocyclic monomers, such as 4-vinylpyridine, 2-vinylpyridine, N-vinylpyrrolidone, N-vinylimidazole and 2-vinylthiophene, unsaturated carboxylic acids, such as methacrylic acid, acrylic acid, and acryloxypropionic acid, vinyl aromatic monomers, such as α-methylstyrene, styrene and p-hydroxystyrene, maleic anhydride, maleimide, N-alkyl maleimides, N-aryl maleimides, vinyl acetate and acrylonitrile. One group of preferred polymers are those with at least 80 mol % (meth)acrylate mers, more especially at least 90% (meth)acrylate mers. As used herein with respect to mers, the terms "a preponderance" and "predominantly" are used to mean a mol percentage greater than 50%.

The lower alkyl (meth)acrylate polymer useful for preparing the glutarimide or for incorporating (meth)acrylate mers into the glutarimide-containing polymer may by prepared, using various ionic or free-radical methods, to a weight-average molecular weight from about 10,000 to about 10,000,000. A preferred range for retention of properties and ease of processing is from about 50,000 to about 200,000. A preferred process for manufacture uses a continuous-flow, stirred-tank reactor, but other polymerization processes which will be readily apparent to those skilled in the art, including suspension, bulk, or emulsion may be employed. The polymer may contain stabilizers, such as against ultraviolet light or heat degradation, and other additives such as processing aids, dyes and the like which are well known to those skilled in the art.

Another preferred embodiment of the first polymer is a copolymer preferably, of methyl methacrylate containing, in addition to the required glutarimide mers, one or more of styrene, α-methylstyrene, p-hydroxystyrene, (meth)acrylic acid, (meth)acrylic anhydride, (meth)acrylamide, maleic anhydride, maleimide, cyclohexyl (meth)acrylate, N-alkylmaleimides, N-arylmaleimides, 4-vinylpyridine, or N-vinylpyrrolidone, preferably in an amount of up to about 30 mole percent, and more preferably from about 20 to about 30 mole percent,.

A polymer containing at least 60% of mers or the glutarimide of formula I, more preferably where R¹ = R² = R³ = methyl is one preferred embodiment of the first polymer. Such a polymer, either acid-reduced or non-acid reduced, will exhibit a Vicat softening temperature greater than about 140°C. This is particularly preferred where the blend also contains methyl methacrylate mers as the lower alkyl (meth)acrylate.

The second polymer containing at least about 50 mole percent vinyl alcohol mers is preferably a poly (vinyl alcohol), an ethylene-vinyl alcohol copolymer, or a copolymer of vinyl alcohol mers with long-chain alkenoxy methacrylate mers. The poly(vinyl alcohols) may be made by hydrolysis of poly(vinyl acetate), and can be obtained commercially with varying degrees of hydrolysis. The resulting polymers are copolymers containing mers of vinyl alcohol and vinyl acetate. The preferred poly(vinyl alcohols) contain at least about 80 mole percent mers of vinyl alcohol. The preferred alkenoxy methacrylate mers are those which terminate in hydrogen, C₁-C₂₀ alkyl, C₆ aryl or C₇-C₃₀ alkaryl groups.

Because polymers of vinyl acetate which have been extensively or completely hydrolyzed to poly(vinyl alcohol) are quite sensitive to water and exhibit barrier properties influenced by the equilibrium moisture content, it is preferred in the present invention, as it is generally in the known art of barrier resins, to utilize copolymers wherein the vinyl alcohol group is present along with some less hydrophilic mers. Such mers may be (meth)acrylic esters and olefins, and mers of styrene and substituted styrenes grafted to the polymer. Preferred because of ease of synthesis and control of the extent of vinyl alcohol mers are hydrolyzed copolymers of ethylene. The ethylene-vinyl alcohol copolymers may be made by hydrolysis of an ethylene-vinyl acetate copolymer, or can be obtained commercially. They contain from about 15 to about 50 mole percent ethylene mers, and more preferably from about 25 to about 50 mole percent ethylene mers, at least about 50 mole percent vinyl alcohol mers, and may contain additional vinyl mers, as for example residual vinyl acetate mers. However, any other mers suitable or known for use in poly(vinyl alcohol) resins, especially barrier resins containing at least 50 mole percent vinyl alcohol mers may be used to make up the balance of this component of the blend.

The second polymer may be present at amounts up to about 40% by weight of the blend, more preferably from about 5% to about 40% by weight, and still more preferably from about 5% to about 35% by weight. At levels below about 5% the enhanced barrier properties are difficult to discern, and above about 40% the undesirable physical properties of the vinyl alcohol polymer may degrade the physical properties of the blend.

The blend of first polymer and second polymer may further contain one or more other thermoplastic polymers with which the first polymer compatible, to form a multi-polymer blend. Other thermoplastic polymers known to be compatible include polymers such as butadiene/styrene/(meth)acrylic, styrene/(meth)acrylic, and (meth)acrylic multistage polymers (as used herein "-" indicates blended polymers, "/" statistical or random copolymers, and "//" graft or block polymers); butadiene/styrene rubbers, ethylene/propylene/diene rubbers, polyamides, polyamide-multistage polymer blends (as used herein the multi-stage polymer may be a rubber grafted with a compatibilizing polymer and useful, for example, for imparting improved impact resistance to polymers), ethylene/vinyl acetate, styrene/acrylonitrile, styrene/acrylonitrile-multistage polymer blends, styrene/acrylonitrile-ethylene/propylene/diene rubber blends, α-methylstyrene/acrylonitrile, α-methylstyrene/styrene/acrylonitrile, methylstyrene/methyl methacrylate/ethyl acrylate, butadiene//acrylonitrile/styrene, polycarbonate, polycarbonate-multistage polymer blends, polybutylene terephthalate, polybutylene terephthalate-polycarbonate blends, polybutylene terephthalate- multistage polymer blends, polybutylene terephthalate/polytetrahydrofuran, polyvinyl chloride, polyvinyl chloride-multistage polymer blends, polyvinyl chloride-(meth)acrylate blends, chlorinated polyvinyl chloride, acrylonitrile/(meth)acrylate/styrene, epichlorohydrin/bisphenol-A, polyethylene terephthalate or other polyalkylene terephthalate, polyethylene terephthalate-glycol modified, polyethylene terephthalate-acid modified, polyethylene terephthalate-polycarbonate blends, polycaprolactone, polyarylate, copolyester of bisphenol-A with isophthalic and/or terephthalic acids, poly(meth)acrylates, polyacetal, polystyrene, poly(p-hydroxystyrene), high-impact polystyrene, styrene/maleic anhydride, styrene/maleimide, polyolefins, polyvinylidene fluoride, polyvinylidene fluoride-multistage polymer blends, cellulosics, polyethylene oxide, polyamideimide, polyetherester, polyetheresteramide and polyetheramide. The amount of blended other polymers may be up to about 75% by weight of the total multi-polymer blend; above that level the improved barrier properties may be seriously degraded, and below about 5% little effect is seen. A preferred range for the blended other polymers is from about 5 to about 50% by weight, and more preferred is from about 5 to about 30% by weight of the total multi-polymer blend. The blended other polymers may have moderately good barrier properties, such as poly(ethylene terephthalate) or poly(p-hydroxystyrene), or may be relatively poor in barrier properties, such as polycarbonate. The blended other polymers may chemically combine with the first polymer, as occurs under certain melt conditions with polymers of caprolactam and poly(N-methyl)dimethylglutarimide containing residual acid and anhydride groups.

In most cases the blended other polymers may exhibit good, but not unexpectedly good, barrier performance when blended only with the second polymer containing at least about 50 mole percent vinyl alcohol mers. At levels of the blended other polymers above 25%, the blend may lose the beneficial effects on barrier properties contributed by the binary blend of glutarimide polymer with the polymer having vinyl alcohol mers, while below about 5%, the blended other polymers contribute little useful in non-barrier, physical properties, such as toughness, reinforcement, and the like.

Thus, multi-polymer blends preferably contain from 20 to 95% by weight of (A) the first polymer from 2.5 to 40% by weight of (B) the second polymer and up to 25% by weight of (C) the blended other polymers.

Preferred multi-polymer blends are those containing the following polymers as components (A), (B) and (C): (A) poly (methyl methacrylate) (PMMA)-(B) ethylene/vinyl alcohol - (C) poly(p-hydroxystyrene); (A) copolymer (80% methyl methacrylate/20% cyclohexyl methacrylate)-(B) ethylene/vinyl alcohol-(C) polycarbonate; (A) poly(N-methyldimethylglutarimide-(B) ethylene/vinyl alcohol-(C) poly(caprolactam); and (A) poly(N-methyldimethylglutarimide-(B) ethylene/vinyl alcohol-(C) poly(ethylene terephthalate).

The poly(glutarimide) or poly(meth)acrylate may contain additives, such as lubricants, ultraviolet stabilizers, antioxidants and thermal stabilizers. It may also contain low levels of inorganic fillers and/or fibers, such as mica and glass fibers.

The blend may be stabilized against interaction, e.g. transesterification between the alcohol groups of the poly(vinyl alcohol) polymer and the imide or ester groups of the glutarimide polymer; such stabilizers may be present in amounts from about 0.1% to about 2%. Preferred as stabilizers are phosphite or phosphinate esters, such as tris(nonylphenyl) phosphite at levels from about 0.1 to about 0.25 parts per 100 parts of total polymer.

Other polymeric additives such as processing aids, fillers, lubricants, flame retardants, dyes, impact modifiers and surface altering agents may be present in the glutarimide or (meth)acrylate polymer blend. Such impact modifiers may include core/shell modifiers, such as those commonly called MBS modifiers, acrylate rubber//methacrylate outer stage, acrylate rubber//styrene/acrylonitrile outer stage.

An especially useful blend containing the impact modifiers is a blend of the first polymer, the second polymer, and impact-modified poly(vinyl chloride); this blend is tough, and exhibits barrier properties improved over the impact-modified PVC blend and a service temperature sufficient for hot-fill applications.

Because the glutarimide polymers are relatively resistant to gas permeation, addition of other polymers, either as blends into the matrix or as impact modifiers, may lower the resistance to oxygen and moisture, and more of the other polymer containing vinyl alcohol mers may be required to achieve the desired balance of barrier and other properties.

While we do not wish to be bound by theoretical considerations, we believe that, in the binary blends the polymer containing vinyl alcohol mers may be dispersed in relatively fine particles, in laminar form, or even in such a fine dispersion that the blend acts like a compatible mixture, i.e., it exhibits a single glass-transition temperature. In many of the examples below, the dispersion of the ethylene/vinyl alcohol copolymer in the glutarimide continuous phase results in a fine and relatively uniform dispersion of the polymer with vinyl alcohol mers, with particle size averaging below 50^{⊥}100 nm, which is difficult to distinguish from a miscible blend. There is little or no laminar structure noted. In other examples, ethylene/vinyl alcohol polymer of higher ethylene content (44% versus 32%) produces a laminar structure in the glutarimide continuous phase; the barrier properties are comparable to those of the non-laminar blend. Thus, no specific morphology of the polymer causes the improvement in barrier properties, except that the polymer containing vinyl alcohol mers cannot be the continuous phase; when it is, the physical properties of the resulting blend are degraded, and the gas-barrier properties become sensitive to the presence of moisture.

Some end uses require good clarity. This can be obtained by methods known in the art, i.e., by matching the refractive index of the matrix polymer or matrix polymers to that of the vinyl alcohol copolymer. This match must occur within the limits set forth herein for component^{⊥}polymer levels, nature of the continuous phase, and compatibility of the polymers comprising the matrix blend. In other cases, particularly with multi-component blends containing reactive other polymers such as polyamides (nylons), clarity is observed where one skilled in the art would expect hazy or translucent blends.

Many of the blends of the first polymer containing mers of (meth)acrylate or glutarimide with the second polymer containing at least 50 mol percent vinyl alcohol mers exhibit surprisingly good gas-barrier properties when compared with the barrier properties of the first polymer alone, or when compared with the expected improvement in barrier properties that should result from incorporating a relatively small amount of the polymer containing the vinyl alcohol mers. The improvement in gas-barrier properties of the first polymer is not a linear function of the amount of the second, vinyl-alcohol-containing polymer added, but instead increases sharply with the addition of only a small amount of second polymer, and shows little additional improvement at levels of second polymer beyond 40% by weight. As little as 10% by weight, and preferably from about 10 to about 40% by weight, of second polymer blended with the first polymer may produce a blend having oxygen permeability reduced by approximately an order of magnitude or more when compared to those of the first polymer alone.

In the data reported herein, the theoretical or calculated permeability is based on what is essentially an averaging effect. This is the expected behavior for compatible or well-dispersed mixtures, and is represented by a straight-line plot of the natural logarithm of permeability versus concentration of the blend components. Where the dispersion is poor, another response to varying the concentration of the polymer having better barrier properties may occur: the. S-shaped curve. In this case the barrier properties remain essentially those of the poorer barrier continuous phase as the concentration of the second phase is increased, until a concentration of the second phase is reached where phase inversion occurs, and the second phase undergoes a transition to the continuous phase as the poorer barrier polymer becomes the discontinuous phase. Through that transition, the barrier properties rapidly improve until they are essentially those of the second polymer, which has now become the continuous phase. Although the specific polymer combinations of the present invention exhibit essentially an S-shaped curve as the blend composition is varied, the marked improvement in barrier properties occurs in the absence of phase inversion, and at an unexpectedly low level of the second (good) barrier component.

Blending conditions are not thought to be critical, so long as temperatures which cause significant loss of hydroxyl functionality from the vinyl alcohol mers, through either intra- or intermolecular reactions, are avoided. A reasonable range of processing temperatures is from about 200°C to about 260°C; below this range the mixture is highly viscous and thus difficult to process, while above this range the polymer tends to thermally degrade at an excessive rate, and discoloration or bubbles may occur in the polymer if it is held at temperatures above this range for extended periods. A temperature range of from about 230° to about 240°C is preferred for the polyglutarimides.

The polymers may be admixed and blended in a number of ways known to the polymer processing art. The polymers, along with any desired adjuvants and/or other polymers to be combined, may be mixed on a heated mill roll or other compounding equipment, and the mixture cooled, granulated and extruded into film. The polymers may be admixed in extruders, such as single-screw or double-screw extruders, compounded and extruded into pellets which may be then re-fabricated. The extruder may also be used to extrude the blend as pipe, sheet, film, or profile. Pelletized or granulated polymer may be injection or compression molded into sheet, film, or shaped articles.

Thorough mixing and dispersion of the additive polymer is important, but otherwise processing conditions are similar to those of the unmodified matrix polymer and may be readily determined by appropriate experimentation and adjustment of processing conditions by one familiar with processing of the unmodified polymers.

Films or sheets may be uniaxially or biaxially oriented either during extrusion or after such processing, by reheating and stretching.

The polymer granules may be injection molded or extruded into appropriate parisons which are then treated by conventional molding and blowing techniques into bottles or other containers, which containers may be stretch oriented uniaxially or biaxially, or may be left unoriented. It is known in the art for such containers to have closures that allow them to be sealed or capped.

Film or sheet may be treated with additives after forming, such as appropriate heat-seal adhesives, coatings for ink adhesions, printing, labels, and the like.

Films or sheets of the blends of the present invention may be utilized in co-laminar structures, such as multilayered films, co-extrusion into bottles, and the like. In such operations, the blends have excellent adhesion to a variety of substrates, and separate adhesive layers, or "tie layers", are generally not required, although they may be used. The other polymer of the co-laminate may have specialized barrier properties, such as poly(vinylidene chloride) imparts. Preferred is a co-laminate which is tough or inexpensive, such as nylon, impact-modified nylon, poly(vinyl chloride), polycarbonate, poly(ethylene terephthalate), or a polyolefin such as polypropylene. Such co-laminar structure may involve more than one species of co-laminate and may also involve more than one layer of the blend polymer. The total number of layers is limited only by the capability of the equipment used to produce the multi-layer film or sheet.

The films or sheets, as either monolithic or composite structures, and including articles formed from the films or sheets, may be biaxially oriented, uniaxially oriented or unoriented.

The uses to which the gas-barrier polymers of the present invention may be put are many. Films or wrappings may be used in the packaging of many foodstuffs, such as meat, snacks, boil-in-the-bag items such as frozen vegetables, and the like. Containers suitable for the packaging of carbonated or oxygen-sensitive beverages, such as colas, ginger ale, fruit juice, and the like, may be prepared. Containers suitable for hot-fill or sterilization may be molded from suitable injection-molded or extruded parisons.

Such containers or bottles may be used for packaging of condiments, ketchup, maple syrup, and the like. They may also be used for heat-sterilized containers, such as for intravenously administered fluids, serum vials, medical specimen vials and the like, and to package oxygen-sensitive chemicals.

Other uses for transparent barrier compositions include protecting fragile artifacts, such as books and archaeological specimens, from oxidation while permitting them to be viewed readily. They may provide protective coatings for easily oxidized metals or oxygen-sensitive conductive polymers, as for example in solar-energy collection devices. They may also be used in devices where a specific concentration of gases must be maintained, such as so-called high-temperature metal oxide superconductors, which must be maintained in an oxidizing atmosphere, and controlled-atmosphere chambers used for handling sensitive chemical and biological materials, i.e. "dry boxes" and the like.

Further details of the invention are given in the following examples which are intended to illustrate the present invention. All percentages are by weight unless otherwise specified and all reagents are of good commercial quality unless otherwise specified.

The resins used in the following examples are described below:
Polyglutarimide as used in the following examples refers to polymers made by reacting poly(alkyl methacrylate) homo- or copolymers with amines or ammonia at elevated temperatures in a devolatilizing extruder.

Poly(N-methylglutarimide) (PMG) refers to a commercial polymer made from poly(methyl methacrylate) and methyl amine. Acid-content-reduced poly(N-methylglutarimide) refers to a similar polymer further reacted with agents that eliminate acid and/or anhydride groups, as for example dimethyl carbonate, as taught in U.S. Patent No. 4,727,117. In both cases, the Vicat softening temperature was related to the degree of imidization.

Poly(methyl methacrylate) (PMMA) in these examples refers to polymers with a preponderance of methyl methacrylate mers, and particularly those with greater than 85% methyl methacrylate mers, with the other mers being lower alkyl esters of acrylic or methacrylic acid. PMMA homopolymer refers to a polymer with mers at least about 99% methyl methacrylate. Such polymers are made by free-radical polymerization in a continuous stirred tank reactor to a range of from about 30 to about 65% conversion at temperatures from about 120° to about 200°C, usually contain a mercaptan chain transfer agent, are separated from residual monomer in a devolatilizing extruder, extruded through a die and the extruded strands cut into pellets. Such polymers are the starting materials for the imidization reactions with ammonia or lower alkyl amines. It should be noted that the process for preparing the PMMA is not restricted to the continuous process described above; well-known methods such as bulk casting, suspension polymerization, and emulsion polymerization may also be used. In the multi-polymer blends, the polycarbonate was a commercial bis-phenol A polycarbonate obtained from Mobay Chemical Company, having a melt flow rate of 55-60 grams/10 minutes at 300°C, measured according to ASTM Method D 1238. The poly(p-hydroxystyrene), of 32,000 weight-average molecular weight, was purchased from Hoechst-Celanese, and was reported to have a barrier value against oxygen of 7.88 cm³·mm/m²·1013x10⁻³bar·day (cm³·mm/m²·atm·day).

The poly(ethylene-vinyl alcohol) copolymers and the poly(vinyl alcohol) polymers were commercially available; both are believed to be prepared by the hydrolysis or saponification of the corresponding vinyl acetate co- or homopolymers. For the copolymers used, the molar percentage of ethylene in the copolymer and the melt index, as a correlation with weight-average molecular weight, are given in Table I, below.

**Table I**

| Vinyl Alcohol Homo- and Copolymers | | | | |
|---|---|---|---|---|
| Designation | Polymer Type | Mol% Ethylene | Melt Index | MW |
| CoP-1 | Ethylene-vinyl alcohol | 32 | 1.3 | ---- |
| CoP-2 | Ethylene-vinyl alcohol | 44 | 5.5 | ---- |
| CoP-3 | Ethylene-vinyl alcohol | 27 | ---- | ---- |
| CoP-4 | Ethylene-vinyl alcohol | 38 | 3.5 | ---- |
| HP-1 | Poly(vinyl alcohol) | -- | -- | 14000 |
| HP-2 | Poly(vinyl alcohol) | -- | -- | 85000 |
| HP-3 | Poly(vinyl alcohol) | -- | -- | 115000 |
| HP-4 | Poly(vinyl alcohol) | -- | -- | ---- |

Melt index was in grams/10 minutes, measured at 190°C for CoP-1 and CoP-2 and 210°C for CoP-4.

The commercial designations are: CoP-1: Eval F-101A; CoP-2 = Eval E 105A; CoP-3 = Eval L (all supplied by Evalco); CoP-4 = Soarnol ET, supplied by Nichimen America, Inc. New York, NY (U. S. agents for Nippon Gohsei of Japan); HP-1, HP-2, and HP-3 supplied by Polysciences Inc. Warrington, PA 18976; HP-4 = Hitech Polyvinyl alcohol containing an unspecified plasticizer, made according to U.S. Patent No. 4,536,532 , and supplied by Hitech Polymers, Inc., P. O. Box 30041, Cincinnati, OH 45230.

Blending of polymers: Polymer blends were prepared by tumble-blending pellets, usually with addition of a small amount of thermal stabilizer (0.25 wt. % tris(nonylphenyl phosphite) based on total resin content). The pellets were fed to a twin-screw, counter-rotating, intermeshing extruder, length 870 mm, equipped with a vacuum vent, a single-hole strand die of approximately 6 mm. diameter, a water bath for cooling the extruded strand, and a strand pelletizer. The feed zone was set at 230°C, and the barrel and die zones at 235°C. The melt temperature was between 226° and 238°C; a screw speed of 100 rpm was employed.

Alternatively, for smaller samples, blends were prepared from blends of polymer powders and granulated pellets or bulk castings. They were milled on a two-roll electric mill for three minutes at 205-215°C, then removed from the mill rolls, cooled, granulated and compression molded using a Carver press. The samples were molded at 138 MPa and 215°C into 127-mm-square plaques 0.13 mm thick.

Preparation of films: A single-screw extruder, 25.4 mm in diameter, 24/1 length/diameter ratio was equipped with a two-stage vacuum vent, a 152.4 mm "coat-hanger" adjustable-thickness film die, a three-roll, heated film stack immediately adjacent to the die lips for receiving the film on extrusion, and a film puller and film wind-up apparatus. The puller speed was set to avoid any drawdown of the film. The extruder was operated at 75 rpm; melt temperatures were usually 232° to 237°C, but may be adjusted depending on recommendations from the resin supplier to achieve acceptable extrusion rates. The roll temperatures of the stack were: top and middle: 132°C, bottom 100°C. Film of thickness 76 to 635 »m were prepared by this method.

Injection Molding: Blended pellets were molded in an injection-molding apparatus equipped with a heated, ASTM family mold. Injection pressures were 5.17 to 7.58 MPa, with back pressure of 0.69 MPa; the melt temperature was 232° to 260°C, depending upon the viscosity of the polymer melt. The mold temperature was 110°C.

Morphology: Polymeric blends were sectioned by microtoming at room temperature to sections about 100 nm thick, and stained with ruthenium tetroxide by the method of Trent et al., Macromolecules, 16, 589 (1983). Exposure to vapors from a 0.5% aqueous solution of RuO₄ was about one hour at room temperature. Transmission electron microscopy at a magnification of up to 25000X was carried out on a Zeiss EM-10 instrument.

Oxygen permeability values: Permeability was tested on a Mocon Ox-Tran 1000 unit, manufactured by Modern Controls, Minneapolis, MN. Films of measured dimensions were mounted in the unit, equilibrated with nitrogen to determine any leakage factor or edge effect, and then exposed to pure oxygen test gas until the carrier gas on the opposite side of the film reached equilibrium. Oxygen was detected by a nickel-cadmium fuel cell known as a Coulox Detector. The unit was equipped to record the oxygen content which was calculated in units of cm³·254x10⁻⁵cm/645cm²·1013x10⁻³bar·day (cm³·mil/100in²·atm·day); these units were converted to cm³·mm/m²·1013x10⁻³bar·day (cm³·mm/m²·atm·day) which are also the permeability units in Tables XII, XIII, XIV, XVI and XVII by multiplying by 0.3937. The resulting values were compared with values measured or reported for the single component (non-blend) film. Measurements were at 23°C and 0% relative humidity unless otherwise noted.

### EXAMPLE 1

This example illustrates preparation of a blend of a poly(glutarimide) and an ethylene-vinyl alcohol copolymer. The values for the ethylene-vinyl alcohol polymer were from the manufacturer's literature, and were conducted on the dry polymer molding or film unless otherwise noted. Film thickness was approximately 0.178 mm. The properties of the resulting blend are shown in Table II below.

**Table II**

| Properties of a Polyglutarimide-Ethylene-Vinyl Alcohol Blend | | | |
|---|---|---|---|
| Physical Property | Polymer or Blend | | Glutarimide containing 10 wt. percent CoP-1 |
| | Glutarimide¹ | CoP-1² | |
| O₂ Perm., 0% RH | 1.0 | >0.002 | 0.055 |
| O₂ Perm., 100% RH | 1.0 | 3.7 | 0.16 |
| Tensile Modulus, MPa | 4595 | 3686 | 4134 |
| Glass temperature, °C | 170³ | 65 | 169, 69⁴ |
| Visual clarity | excellent | poor | good |

| | | | |
|---|---|---|---|
| ¹ N-methylglutarimide, no acid reduction treatment, Vicat 170°C | | | |
| ² see Table describing composition and MW of ethylene-vinyl alcohol copolymers. | | | |
| ³ from Vicat penetration or softening temperature | | | |
| ⁴ two peaks, from differential scanning calorimetry | | | |

### EXAMPLES 2 - 6

These examples illustrate the oxygen permeability of glutarimide blends with 10 to 25 weight percent of several polymers containing vinyl alcohol mers. Blends were prepared with the same glutarimide matrix as in Example 1. Values were at 0% relative humidity. The oxygen permeability for the blends at the specified levels of polymers containing the vinyl alcohol mers are shown in Table III below.

**Table III**

| Oxygen Permeability of Polyglutarimide Blends | | | | | | |
|---|---|---|---|---|---|---|
| Example | Vinyl Alcohol (Co)polymer | Level of Copolymer in Glutarimide of Example 1, wt. % | | | | |
| | | 0% | 10% | 15% | 20% | 25% |
| 1 | CoP-1, Ex. | 4.92 | 0.057 | -- | 0.083 | -- |
| 2 | CoP-4 | - | <0.3¹ | -- | <0.002 | -- |
| 3 | HP-1 | -- | 1.0 | -- | <0.002 | -- |
| 4 | HP-2 | -- | 0.91 | -- | <0.002 | -- |
| 5 | HP-3 | -- | 1.06 | -- | 0.71 | -- |
| 6a | HP-4, Lot 1 | -- | 0.055 | -- | 0.083 | -- |
| 6b | HP-4, Lot 2 | -- | 0.71 | 0.79 | --- | 0.13 |

| | | | | | | |
|---|---|---|---|---|---|---|
| ¹ In separate measurement, <0.005 was value. | | | | | | |

### EXAMPLE 7

This example illustrates rapid decrease of oxygen permeability at increasing but still low levels of an ethylene-vinyl alcohol copolymer. The polymers and processing were that of Example 1. The predicted values were those read from a line drawn on semi-log paper between the 0 and 100 CoP-1 levels. Film thicknesses were about 0.177 mm. The observed and predicted values for oxygen permeability of the blends are shown in Table IV below.

**Table IV**

| Oxygen Permeability of Polyglutarimide-Ethylene-Vinyl Alcohol Blends | | |
|---|---|---|
| % CoP-1 | Predicted | Found |
| 0 | ---- | 1.22 |
| 1 | 1.18 | 0.81 |
| 2.9 | 1.10 | 0.88 |
| 6.5 | 0.97 | 0.81 |
| 9.1 | 0.88 | 0.34 |
| 11.1 | 0.82 | 0.24 |
| 12.6 | 0.78 | 0.13 |
| 15 | 0.71 | 0.078 |
| 100 | --- | 0.033 |

The onset of substantial lessening of oxygen permeability in the present system was seen at about 9 wt. % of the CoP-1 additive, but values below the theoretical were seen at lower concentrations in the blend. Examination of the blends with above 9.1% CoP-1 showed little evidence of a laminar morphology for the dispersed CoP-1 phase.

### EXAMPLE 8

This example illustrates rapid decrease of oxygen permeability at increasing but still low levels of a second ethylene-vinyl alcohol copolymer (CoP-3, containing 27 mol-% ethylene). The PMG was that of Example 1. The predicted values were those read from a line drawn on semi-log paper between the 0 and 100 CoP-3 levels. Film thicknesses were about 0.177 mm. The predicted and observed values for oxygen permeability of the blends are shown in Table V below.

**Table V**

| Oxygen Permeability of Polyglutarimide-Ethylene-Vinyl Alcohol Blends | | |
|---|---|---|
| % CoP-3 | Predicted | Found |
| 0 | ---- | 1.22 |
| 3 | 1.15 | 1.32 |
| 6.5 | 0.79 | 1.15 |
| 9 | 0.69 | 0.67 * |
| 11 | 0.61 | 0.17 * |
| 15 | 0.45 | 0.07 |
| 17.5 | 0.38 | 0.026 |
| 20 | 0.32 | 0.086 |
| 23.6 | 0.25 | 0.0016 |
| 100 | ---- | 0.0016 |

| | | |
|---|---|---|
| * From a separate series of experiments. | | |

### EXAMPLE 9

This example illustrates rapid decrease of oxygen permeability at increasing but still low levels of a third ethylene-vinyl alcohol copolymer (CoP-2, containing 44 mol-% ethylene). The PMG was that of Example 1. The predicted values were those read from a line drawn on semi-log paper between the 0 and 100 CoP-2 levels. Film thicknesses were about 0.177 mm. The predicted and observed values for oxygen permeability of the blends are shown in Table VI below.

**Table VI**

| Oxygen Permeability of Polyglutarimide-Ethylene-Vinyl Alcohol Blends | | |
|---|---|---|
| % CoP-2 | Oxygen Permeability | |
| | Predicted | Found |
| 0 | ----- | 1.22 |
| 6 | 0.96 | 1.24 |
| 9 | 0.84 | 0.70 |
| 12 | 0.74 | 0.58 |
| 13.4 | 0.70 | 0.43 |
| 14.3 | 0.68 | 0.54 |
| 15 | 0.66 | 0.10 |
| 20 | 0.54 | 0.20 |
| 25 | 0.44 | 0.002 |
| 27.3 | 0.40 | 0.0015 |
| 35 | 0.29 | 0.18 |
| 40 | 0.24 | 0.24 |
| 100 | ----- | 0.001 |

Microscopic examination of the blend containing 20% of the CoP-2 additive showed a laminar morphology for the dispersed CoP-1 phase.

### EXAMPLES 10 - 13

These examples show the effect of relative humidity on blends of a poly(vinyl alcohol) homopolymer with various glutarimide matrices. The poly(vinyl alcohol) was that used in Example 1 (HP-4). The polyglutarimides were imidized in a devolatilizing extruder to degrees of imidization measured by the Vicat softening temperature of the resulting resin. Portions of these polymers were then reduced in acid content by treatment by the method of Hallden-Abberton et al. The polymers used in the examples are shown in Table VII below.

**Table VII**

| Polymers Used in Relative Humidity Effects Study | | | |
|---|---|---|---|
| Example | Poly(glutarimide) Source | Acid-reduced? | Vicat softening temperature, °C |
| 10 | PMG (from Example 1) | N | 170 |
| 11 | PMG | N | 150 |
| 12 | PMG-T | Y (Ex. 10) | 160 |
| 13 | PMG-T | Y (Ex. 11) | 145 |

These data show that a) high relative humidity is deleterious to permeability behavior, even at the relatively low levels of poly(vinyl alcohol) homopolymer employed, and b) 10% of poly(vinyl alcohol) additive is not enough to produce a drastic decrease in the permeability value.

### EXAMPLES 14 - 23

These examples illustrate that substantial improvements in barrier performance can be achieved by blending relatively low levels of an ethylene-vinyl alcohol copolymer with an acid-reduced poly- N-methylglutarimide. The polyglutarimide was that of Example 12 except for one example where a polymer of lower imide content (Ex. 13) was used; the vinyl alcohol copolymer was CoP-1. The oxygen permeability of the blends is shown in Table IX below.

**Table IX**

| Oxygen Permeability of Blends of Acid-Reduced Polyglutarimide with Ethylene-Vinyl Alcohol Polymer | | | | |
|---|---|---|---|---|
| Example | Source of Glutarimide | Wt. % CoP-1 | Relative Humidity | Oxygen Permeability |
| 14 | Ex. 12 | 0 | 0 | 2.42 |
| 15 | Ex. 12 | 3 | 0 | 3.40 |
| 16 | Ex. 12 | 6 | 0 | 2.15 |
| 17 | Ex. 12 | 9 | 0 | 0.721 |
| 18 | Ex. 12 | 10 | 0 | 1.2 |
| 19 | Ex. 13 | 11.1 | 0 | 0.33 |
| 20 | Ex. 12 | 12 | 0 | 0.131* |
| 21 | Ex. 12 | 15 | 0 | 0.0004 |
| 22 | Ex. 12 | 20 | 0 | 0.0004 |
| 23 | Ex. 12 | 25 | 0 | 0.079 * |

| | | | | |
|---|---|---|---|---|
| * sample pelletized poorly and film may not have been uniform. | | | | |

### EXAMPLES 24 - 26

These examples illustrate that a glutarimide prepared from ammonia does not exhibit the improvement in barrier properties at low levels of blending with a ethylene-vinyl alcohol; copolymer. The ammonia imide had a Vicat temperature of 205°C, was >90% imidized, and about 48% percent of the imide groups were N-methylimide (during imidization with ammonia, monomethylamine is formed, which then competes for the sites of imidization). The samples at 5 and 10% ethylene-vinyl alcohol polymer were hazy; the sample at 20% could not be processed, possibly due to chemical interactions leading to crosslinking. Results of these tests are shown in Table X, below.

**Table X**

| Oxygen Permeability of Ammonia Polyglutarimides Blended with Poly(Ethylene-Vinyl Alcohol) | | | | |
|---|---|---|---|---|
| Example | Glutarimide Glutarimide | % CoP-1 | Relative Humidity | Oxygen Permeability |
| 24 | Ammonia | -- | 0 | ∼ 0.4 |
| 25 | Ammonia | 5 | 0 | 1.3 |
| 26 | Ammonia | 10 | 0 | 1.8 |

### EXAMPLE 27

This example illustrates that a styrene copolymer containing imide units does not exhibit outstanding barrier properties. A commercial styrene-maleic anhydride copolymer containing about 20% anhydride by weight was treated with methylamine to yield the N-methylsuccinimide functionality. The permeability value for the polymer was greater than 200. Blending with 20% CoP-1 did not substantially decrease the permeability value.

### EXAMPLE 28

This example demonstrates that the blends of glutarimide polymer and ethylene-vinyl alcohol polymer may be further combined with poly(vinyl chloride) and a methacrylate-butadiene-styrene impact modifier to produce a blend with good barrier performance and improved service temperature.

Poly(vinyl chloride) formulations were prepared as follows:

| | |
|---|---|
| Poly(vinyl chloride), | K= 69.100 parts |
| Organotin stabilizer | 1.0 phr |
| Polyglutarimide, (Ex. 11) | 0 or 40 phr |
| Ethylene-vinyl alcohol copolymer, (CoP-1) | 0 or 4.4 phr |
| MBS modifier | 0 or 24 phr |

The materials were intensively blended while dry, milled for 5 minutes on a two-mill roll at 190°C, and the resulting polymer blend pressed into a film which was 0.2 mm thick. Results of oxygen permeability tests on these materials are shown in Table XI, below.

**Table XI**

| Blends of Polyglutarimide-Ethylene Vinyl Alcohol with Poly(Vinyl Chloride) and MBS | | | |
|---|---|---|---|
| Glutarimide,phr | CoP-1,phr | MBS,phr | Oxygen Permeability |
| 0 | 0 | 0 | 3.1 |
| 40 | 0 | 0 | 3.7 |
| 40 | 0 | 24 | 8.23 |
| 40 | 4.4 | 0 | 2.5 |
| 40 | 4.4 | 24 | 3.5 |

### EXAMPLES 29 - 40

In the following examples, blends were prepared from CoP-1, N-methyldimethylglutarimide of Vicat softening temperature 170°C and made without acid reduction treatment, and nylon 6 (poly(caprolactam)) manufactured by Allied ^{⊥}Signal Inc. as Capron 8202. Sodium hydroxide was added at a level of 500 parts per million parts of the total polymer blend to those blends indicated "NaOH - Yes" below. These polymers were blended in a 2.5-cm Killion extruder equipped with a barrier screw operating at 100 rpm and a 4.8-mm die, and having the following temperature profile: feed zone 250°C; zone 2 - 300°C; zone 3 - 300°C; die 1 - 275°C; die 2 - 75°C. Blended samples were compression molded into 100-mm square films for permeability testing. The blend compositions and testing results are shown in Table XVII below. Upon visual examination, all samples were transparent and free from haze.

**TABLE XVII**

| Imide-Poly(Vinyl Alcohol)-Polyamide Blends | | | | | | | |
|---|---|---|---|---|---|---|---|
| Example | Glutar imide% | Nylon 6 % | CoP-1 % | NaOH | Film Thickness, »m | Permeability | Clarity |
| 29 | 80.75 | 5.0 | 14.25 | No | 307 | 0.705 | Haze-free |
| 30 | 80.75 | 5.0 | 14.25 | No | 279 | 0.669 | Haze-free |
| 31 | 72.25 | 15.0 | 12.75 | No | 376 | 0.657 | Haze-free |
| 32 | 72.25 | 15.0 | 12.75 | No | 269 | 0.677 | Haze-free |
| 33 | 72.25 | 15.0 | 12.75 | Yes | 315 | 0.516 | Haze-free |
| 34 | 63.75 | 25.0 | 11.25 | No | 345 | 0.508 | Haze-free |
| 35 | 63.75 | 25.0 | 11.25 | No | 295 | 0.748 | Haze-free |
| 36 | 63.75 | 25.0 | 11.25 | Yes | 340 | 0.776 | Haze-free |
| 37 | 63.75 | 25.0 | 11.25 | Yes | 325 | 0.929 | Haze-free |
| 38 | 47.5 | 47.5 | 5.0 | Yes | 246 | 1.14 | Haze-free |
| 39 | 45.0 | 45.0 | 10.0 | Yes | 170 | 0.921 | Haze-free |
| 40 | 42.54 | 2.5 | 15.0 | Yes | 216 | 0.638 | Haze-free |

## Claims

1. A polymer blend comprising
(a) from 20% to 95% by weight of first polymer containing, in a total amount of at least 50 mole percent, glutarimide units having the formula 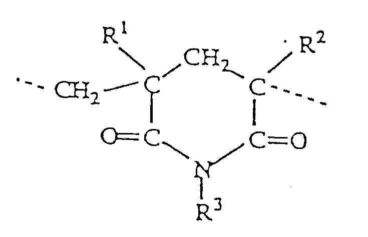 wherein R¹ and R² are selected from H and (C₁-C₆)- alkyl, and R³ is selected from alkyl, aryl, alkaryl and aralkyl
and, optionally, units of (C₁-C₆)-alkyl-(meth)acrylate, the first polymer forming a continuous phase;
(b) 0 to 25% by weight of other thermoplastic polymer compatible with (a); and, to improve the barrier properties of the blend,
(c) from 2.5% to 40% by weight of a second polymer having at least 50 mole percent vinyl alcohol mers, which is either mixed with, or as a discontinuous phase in, the continuous phase, the percentages being by weight of (a) plus (b) (if any) plus (c).

2. A blend as claimed in Claim 1 wherein the polymer (a) is present at from 30% to 95%, preferably 40% to 70%, by weight.

3. A blend as claimed in Claim 1 or 2 wherein R³ is (C₁-C₄)-alkyl, preferably methyl.

4. A blend as claimed in any preceding Claim wherein the alkyl (meth)acrylate is methyl methacrylate and R¹, R² and R³ of the glutarimide are methyl.

5. A blend as claimed in any preceding Claim wherein the first polymer has a weight-average molecular weight from 50,000 to 200,000.

6. A blend as claimed in any preceding Claim wherein the first polymer contains at least 60 mole percent, preferably at least 80 mole percent, glutarimide units.

7. A blend as claimed in any preceding Claim wherein the second polymer (c) is present in an amount of from 5% to 35% by weight of the blend.

8. A blend as claimed in any preceding Claim wherein the second polymer (c) contains ethylene units and/or long-chain alkenoxy (meth)acrylate units.

9. A blend as claimed in Claim 8 wherein the ethylene units are present in an amount of 15 to 50 mole percent, preferably 25 to 50 mole percent and/or any long-chain alkenoxy terminates in hydrogen, a (C₁-C₂₀)-alkyl, C₆ -aryl or (C₇-C₃₀)-alkaryl group.

10. A blend as claimed in any of Claims 1 to 9, in the form of sheet, film, wrapping or container wall, for the protection of materials from environmental gases or vapours.

11. A blend as claimed in Claim 10 in the form of container wall which is biaxially oriented and/or optionally being of a laminar structure also having one or more additional layers of other polymer.

## Patentansprüche

1. Polymermischung, umfassend:
(a) von 20 Gew.-% bis 95 Gew.-% eines ersten Polymers, enthaltend in einer Gesamtmenge von mindestens 50 Molprozent Glutarimideinheiten mit der Formel 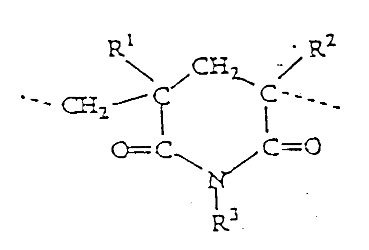 worin R¹ und R² aus H und (C₁-C₆)-Alkyl gewählt sind und R³ aus Alkyl, Aryl, Alkaryl und Aralkyl gewählt ist, und gegebenenfalls Einheiten eines (C₁-C₆)-Alkyl(meth)acrylates, welches erste Polymer eine kontinuierliche Phase bildet;
(b) 0 bis 25 Gew.-% eines anderen thermoplastischen Polymers, welches mit (a) kompatibel ist und die Sperreigenschaften der Mischung verbessert;
(c) von 2,5 Gew.-% bis 40 Gew.-% eines zweiten Polymers mit mindestens 50 Molprozent Vinylalkohol-Einheiten, welches entweder mit der kontinuierlichen Phase gemischt ist oder als eine diskontinuierliche Phase in der kontinuierlichen Phase vorhanden ist., wobei die Prozentsätze von (a) plus (b) (falls vorhanden) plus (c) auf Gewichtsbasis sind.

2. Mischung, wie in Anspruch 1 beansprucht, wobei das Polymer (a) von 30 Gew.-% bis 95 Gew.-%, vorzugsweise von 40 Gew.-% bis 70 Gew.-%, vorliegt.

3. Mischung, wie in Anspruch 1 oder 2 beansprucht, wobei R³ (C₁-C₄)-Alkyl, vorzugsweise Methyl, ist.

4. Mischung, wie in einem vorhergehenden Anspruch beansprucht, wobei das Alkyl(meth)acrylat Methylmethacrylat ist und R¹, R² und R³ des Glutarimids Methyl sind.

5. Mischung, wie in einem vorhergehenden Anspruch beansprucht, wobei das erste Polymer ein Gewichtsmittel des Molekulargewichts von 50.000 bis 200.000 aufweist.

6. Mischung, wie in einem vorhergehenden Anspruch beansprucht, wobei das erste Polymer mindestens 60 Molprozent, vorzugsweise mindestens 80 Molprozent, Glutarimideinheiten enthält.

7. Mischung, wie in einem vorhergehenden Anspruch beansprucht, wobei das zweite Polymer (c) in einer Menge von 5 Gew.-% bis 35 Gew.-% der Mischung vorhanden ist.

8. Mischung, wie in einem vorhergehenden Anspruch beansprucht, wobei das zweite Polymer (c) Ethyleneinheiten und/oder langkettige Alkenoxy(meth)acrylateinheiten enthält.

9. Mischung, wie in Anspruch 8 beansprucht, wobei die Ethyleneinheiten in einer Menge von 15 bis 50 Molprozent, vorzugsweise 25 bis 50 Molprozent, vorhanden sind, und/oder jegliches langkettige Alkenoxy in Wasserstoff eine (C₁-C₂₀)-Alkyl-, C₆-Aryl- oder (C₇-C₃₀)-Alkarylgruppe endet.

10. Mischung, wie in einem der Ansprüche 1 bis 9 beansprucht, in der Form einer Folie, eines Films, einer Hülle, einer Gefäßwand, zum Schutz von Materialien vor Umweltgasen oder Dämpfen.

11. Mischung, wie in Anspruch 10 beansprucht, in der Form einer Gefäßwand, welche biaxial orientiert und/oder gegebenenfalls eine laminare Struktur aufweist und auch eine oder mehrere zusätzliche Schichten eines anderen Polymers besitzt.

## Revendications

1. Mélange de polymères comprenant
(a) de 20 à 95 % en poids d'un premier polymère contenant, en une quantité totale d'au moins 50 % en mole, des motifs de type glutarimide ayant la formule suivante 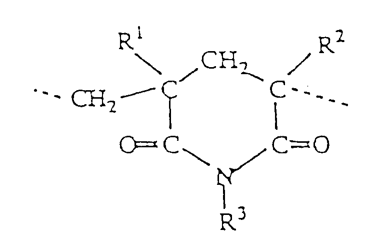 dans laquelle R¹ et R² sont choisis parmi H et les radicaux alkyle en C₁-C₆, et R³ est choisi parmi les radicaux alkyle, aryle alcaryle et aralkyle,
et éventuellement de motifs de (méth)acrylate d'alkyle en C₁-C₆, le premier polymère formant une phase continue ;
(b) de 0 à 25 % en poids d'un autre polymère thermoplastique compatible avec (a) ;
et, pour améliorer les propriétés barrières du mélange,
(c) de 2,5 à 40 % en poids d'un deuxième polymère ayant au moins 50 % en mole de mères d'alcool vinylique, qui est mélangé à la phase continue ou forme une phase discontinue dans la phase continue, les pourcentages étant exprimés en poids par rapport à la somme (a) plus (b) plus (éventuellement) (c).

2. Mélange selon la revendication 1, dans lequel le polymère (a) est présent en une quantité de 30 à 95 et de préférence de 40 à 70 % en poids.

3. Mélange selon la revendication 1 ou 2, dans lequel R³ est un radical alkyle en C₁-C₄, de préférence méthyle.

4. Mélange selon l'une quelconque des revendications précédentes, dans lequel le (méth)acrylate d'alkyle est le méthacrylate de méthyle, et les radicaux R¹, R² et R³ du glutarimide sont des radicaux méthyle.

5. Mélange selon l'une quelconque des revendications précédentes, dans lequel le premier polymère a une masse moléculaire moyenne en masse de 50 000 à 200 000.

6. Mélange selon l'une quelconque des revendications précédentes, dans lequel le premier polymère contient au moins 60 et de préférence au moins 80 % en mole de motifs de type glutarimide.

7. Mélange selon l'une quelconque des revendications précédentes, dans lequel le deuxième polymère (c) est présent en une quantité de 5 à 35 % en poids par rapport au mélange.

8. Mélange selon l'une quelconque des revendications précédentes, dans lequel le deuxième polymère (c) contient des motifs de type éthylène et/ou des motifs de type alcénoxy-(méth)acrylate à longue chaîne.

9. Mélange selon la revendication 8, dans lequel les motifs de type éthylène sont présents en une quantité de 15 à 50 % en mole et de préférence de 25 à 50 % en mole et/ou l'éventuel radical alcénoxy à longue chaîne se termine par un hydrogène ou un groupe alkyle en C₁-C₂₀, aryle en C₆ ou alcaryle en C₇-C₃₀.

10. Mélange selon l'une quelconque des revendications 1 à 9, sous forme d'une feuille, d'un film, d'un emballage ou d'une paroi de récipient, pour protéger des matériaux contre des gaz ou des vapeurs ambiants.

11. Mélange selon la revendication 10, sous forme d'une paroi de récipient, qui comporte une orientation biaxiale et/ou éventuellement présente une structure stratifiée ayant elle aussi une ou plusieurs couches supplémentaires d'un autre polymère.
